# EUROPEAN PATENT SPECIFICATION

(11) **EP 3 377 730 B1**
(45) Date of publication and mention of the grant of the patent: **12.06.2019**
(21) Application number: 16708581.0
(22) Date of filing: 04.02.2016
(51) Int. Cl.: F01B 3/04, F01B 9/06, F16H 25/12

(54) **DEVICE FOR CONVERTING RECIPROCATING MOTION INTO ROTARY MOTION AND VICE VERSA, IN AXIAL-PISTON MECHANICAL SYSTEMS**
VORRICHTUNG ZUR UMWANDLUNG EINER KOLBENBEWEGUNG IN EINE DREHBEWEGUNG UND UMGEKEHRT BEI MECHANISCHEN AXIALKOLBENSYSTEMEN
DISPOSITIF POUR CONVERTIR UN MOUVEMENT DE ALTERNATIF EN UN MOUVEMENT ROTATIF ET INVERSEMENT, DANS DES SYSTÈMES MÉCANIQUES À PISTONS AXIAUX

(30) Priority: 16.11.2015 BG 11214915
(43) Date of publication of application: 26.09.2018
(73) Proprietor: Ksimetro -Tatiana Nikolova Ltd, Sofia 1592 (BG)
(72) Inventor: BRASTINKOV, Lachezar, Alexandrov, Sofia 1700 (BG); NIKOLOVA, Tatiana, Nikolova, Sofia 1700 (BG); BRASTINKOVA, Nevena, Lachezarova, Sofia 1700 (BG)
(74) Representative: Hristova, Lilyana
(86) International application number: PCT/BG2016/000004
(87) International publication number: WO 2016/201529

(56) References cited:
- EP-A1- 0 637 677
- WO-A1-88/05495
- WO-A1-2005/003595
- WO-A1-2011/115595
- DE-A1- 2 552 081
- DE-A1- 10 342 257
- FR-A- 782 997
- FR-A- 820 406
- US-A- 1 565 184
- US-A- 3 587 538
- US-A- 3 786 790
- US-A- 4 090 478
- US-A1- 2003 056 611

## Description

### FIELD OF THE INVENTION

The invention concerns a device for converting reciprocating motion into rotary motion and vice-versa, which is used in design and construction of axial-piston engines, pumps compressors and particularly in internal combustion engines, hydraulic motors and pumps, air piston compressors, water pumps. The Device can also be used in any other devices incorporating mechanisms for converting a reciprocating motion into rotary motion and vice-versa.

### BACKGROUND OF THE INVENTION

In most of the known axial-piston systems - motors, pumps and compressors, the mechanism for converting the reciprocating motion of the piston into rotary motion of the output shaft is crank-connecting rod type, or a curved, spatial,sinusoidal groove type or with inclined plate. The long kinematic chain in these mechanisms, consisting of 5 or 6 elements, creates a greater number of contacts in the mechanism, greater total friction in the joints and greater deformation instability of the mechanism.

In the existing hydraulic motors and pumps, the torque is determined by the 20-degree angle of the tilt plate (DE 10 2008 048 495 A1).The axial component of the force generated by the high oil pressure, presses the bearings, without regard to the function of the hydraulic motor and is much greater than the radial component, which creates the torque on the hydraulic motor (at 20 degree tilt of the plate ratio is 2.747: 1 in favor of the axial component). Thus, the oil pressure is mostly spent for the loading of the bearings, and not for rotating the output shaft. In previous designs have a limitation of the number of pistons, reducing the torque and power of the hydraulic motor. The kinematics of the existing hydraulic motors determines only one working stroke of each piston within one revolution of the output shaft, further reducing the torque and the power of the engine.

In the known constructions of axial-piston mechanical systems the conversion of the reciprocating motion of the pistons into rotary motion of the output shaft and vice-versa is carried out by a large number of kinematic units, which leads to a larger number of connections in the mechanism, a larger contact instability and hence less power permissible load, and generally to a smaller degree of efficiency, a smaller torque and power of the respective mechanical systems (motors). On the other hand, in all of these designs the torque of the output shaft is limited: - in the crank mechanism is limited by the stroke of the piston and in the mechanisms with inclined plate - by the angle of tilt of the plate. Furthermore, in the known designs - a smaller part of the pressure on the piston or of the drive torque is used for useful work, which makes the power unit ineffective. Inefficient is also the use of mechanical design, since per one revolution of the output shaft, the pistons perform at most one stroke.

A plurality of axially-reciprocating mechanical systems of the cam type are known, and a plurality of axial-piston mechanical systems of the cam type, whose kinematic chain comprises: a) an external and internal rings wherein one ring is in contact with the piston, and the other to the output shaft, or both are connected to the piston; b) balls lying ½ in spherical sockets arranged on the inner surface of the outer or on the outer surface of the inner ring, and 1/2 in closed, sinusoidal, spatial groove with a circular cross-section, located back to the position of the sockets; and c) optionally, one or more immobile elements connected to one of the rings, either external or internal,

The known devices make the rotational movement of one of the rings, either external or internal, in a multiple reciprocating movement of the other or the same ring, and vice versa, the multiple reciprocal motion in a rotational manner.

The most common are the schemes where one of the two rings is rotating and the other is a translational one. It is known from FR782997A, US3786790A and WO2005003595A1 a device for converting reciprocating motion of a piston in a rotary motion of an output shaft and vice versa in axial-piston systems, wherein the kinematic chain includes an external and an inner rotation and translation rings connected to the piston and the output shaft, wherein on the outer cylindrical surface of the inner ring there is made a spatial sinusoidal groove with ½ circular cross-section, and on the inner surface of the outer ring there are made spherical sockets, wherein the chain includes balls lying in the spherical sockets and in the spatial sinusoidal groove with ½ circular cross-section, and the device optionally includes one or more stationary elements connected with one of the rings - external or internal. In this type (here called the type II device (B), the rotation ring is the inner ring, and the translation ring is the outer ring.

It is known from US1565184A, FR820406A, US4090478A, WO8805495A1, DE10342257B4 and WO2011115595A1 devices for converting the reciprocating motion of a piston in a rotary motion of an output shaft and vice versa in axial-piston systems, wherein the kinematic chain includes external and internal rotation and translation rings, connected to the piston and the output shaft, herein on the outer cylindrical surface of the inner ring there is made a spatial sinusoidal groove with ½ circular cross-section and on the inner surface of the outer ring there are made spherical sockets, and the chain also includes balls lying in the spherical sockets and in the spatial sinusoidal groove with ½ circular cross-section. Here, also, the rotation ring is the inner one, and the translation ring is the outer one, but in this type (here called the type II device (B-C), the translational outer ring comprises several segments performing separately from each other a reciprocating movement, which is synchronized by the closed spatial sinusoidal groove.

It is known from DE2552081A1 and EP0637677B1 devices for converting the reciprocating movement of a piston into a rotary motion of an output shaft and vice versa in axial-piston systems, wherein the kinematic chain includes external and internal rotation and translation rings connected to the piston and the output shaft, herein on the inner cylindrical surface of the outer ring there is made a spatial sinusoidal groove with ½ circular cross-section and on the outer surface of the inner ring there are made spherical sockets, and the chain also includes balls lying in the spherical sockets and in the spatial sinusoidal groove with ½ circular cross-section, the chain included balls lying in spherical sockets and in the spatial sinusoidal channel with ½ circular cross-section, and the device includes one or more stationary elements connected with one of the rings - external or internal, thus limiting its motion. In these known devices, referred to herein as Type III (A) and Type III (B) devices, the inner ring is both rotating and translational, with the outer ring being limited in motion by one or more stationary elements.

When the one of the rings is immobile, constrained by (linked to) the stationary element, the kinematic chain of the system is composed of 3 elements. And when both are movable, the kinematic chain consists of 4 elements. The short kinematic chain of the Device is closed between the inner ring and the ball, as well as between the ball and the outer ring, by means of the spherical sockets and the closed, sinusoidal, spatial groove, where the contact is between the ball and the two rings, and in this case the diameter of the ball determines the permissible force loading. The ball is contacted by its spherical surface simultaneously with the spatial, sinusoidal groove and with the spherical socket of the inner ring or the outer ring. The circular cross- section of the closed, sinusoidal, spatial groove on the inner cylindrical surface of the outer ring or of the inner ring of the Device provides better contact between it and the ball, which contact represents an arc of a circle. In case of equal demensions, the arc has a larger perimeter than the line, that (perimeter) provides a smaller contact stresses on the elements at the same force loading, and this determines a better performance of the design under the same load, compared to the known mechanical systems, where the contact is linear.

### SUMMARY OF THE INVENTION

An object of the present invention is to provide a highly efficient device for converting the reciprocating motion of the piston into rotary movement of the shaft and vice versa into the axial-piston mechanical systems of engines, pumps and compressors, - which has an increased contact resistance of the power loading of the mechanisms, - and which is able to overcome the kinematic limitations of the torque on the output shaft.

This problem is resolved by a Device for converting the reciprocating motion of the piston into rotary movement of the shaft and vice versa, in axial-piston mechanical systems, whose kinematic chain comprises:
a) an external and an internal rings are connected with the piston, and with the output shaft, , wherein a spatial sinusoidal groove with a 1/2 circular cross-section or spherical sockets is / are made on the inner surface of the outer ring and reverse spherical sockets or spatial sinusoidal channel are / is formed on the outer surface of the inner ring;
b) balls, lying in spherical sockets and in spatial, sinusoidal groove with a 1/2 circular cross-section, wherein the ring with sockets is both rotating and translational.

The simultaneously rotating and translating ring consists of more than one segment (3N or 1N), each of which has at least one socket, the segments having axes parallel to the axis of the device and performing relative to one another irrespective reciprocating motion, synchronized by the closed, sinusoidal, spatial groove.

Each segment of the translating and at the same time rotating ring includes piston with basic and front parts, where the sockets are carved on the front part.

The device also includes pillars lying in cylindrical holes located on the surface of the output shaft to transmit the torque to the output shaft created by the motion of the balls on the sinusoidal groove.

When one of the rings is immobile, constrained by (linked to) the stationary element, the kinematic chain of the system, is composed of 3 elements.

The short kinematic chain of the Device is closed between the inner ring and the ball, as well as between the ball and the outer ring, by means of the spherical sockets and the closed, sinusoidal, spatial groove, where the contact is between the ball and the two rings, and in this case the diameter of the ball determines the permissible force loading.

The ball is contacted by its spherical surface simultaneously with the spatial, sinusoidal groove and with the spherical socket of the inner ring or the outer ring. The circular cross- section of the closed, sinusoidal, spatial groove on the inner cylindrical surface of the outer ring or of the inner ring of the Device provides better contact between it and the ball, which contact represents an arc of a circle. In case of equal demensions, the arc has a larger perimeter than the line, that (perimeter) provides a smaller contact stresses on the elements at the same force loading, and this determines a better performance of the design under the same load, compared to the known mechanical systems, where the contact is linear.

The Device converts the rotational movement of one of the rings - external or internal, into reciprocating motion with multiple cycles of the same ring and vice versa -the reciprocating motion with multiple cycles into rotary motion.

In one variant of the invention, the inner ring is both rotating and translating.

In another variant of the invention, the front and basic parts of the piston contact with their foreheads without being fastened to one another so that the basic part of the piston pushes the front part in motion.

In a further variant of the invention, the device is connected to at least one other such device by means of rigid links (screws) between the rotating rings and the output shafts, as well as between the output shafts of each of the devices. Preferably, the devices are an even number are connected in specularly positioned pairs, whereupon the pistons in the pair of the devices, which have opposite position, relative to one another at the same height on the leading curve of the closed, sinusoidal, spatial grooves, perform asymmetric, reciprocating motion with multiple cycles, parallel to or on the axis of the Device.

In a further variant of the invention, the device is hydraulic and includes a distribution plate for performing and controlling the motion of the pistons, the distribution plate having holes, where also includes an end plate with a high pressure hole (HP1) and a low pressure hole (LP1), as part of the holes of the distribution plate are connected to the high pressure port (HP1) of the end plate by means of a rigid connection with fasteners between the distribution plate and the end plate and the other part of the holes of the distribution plate are connected with the low pressure hole (LP1) of the end plate by means of a rigid connection with the fasteners between the distribution plate and the end plate, wherein the base portion of each piston enters in a revolver with holes for the main parts of each piston. Preferably, the devices are more than one and are connected to each other by means of a rigid connection with fasteners between the rotation rings of each of the devices, and wherein all devices operate on a common output shaft.

The invention also relates to an internal combustion engine comprising at least one device for converting the reciprocating motion of the piston into rotary movement of the shaft and vice versa of the embodiments described above, with the exception of the hydraulic ones.

The invention also relates to a compressor comprising at least one hydraulic device for converting the reciprocating motion of the piston into rotary movement of the shaft and vice versa.

The invention also relates to a pomp comprising at least one hydraulic device for converting the reciprocating motion of the piston into rotary movement of the shaft and vice versa.

### DESCRIPTION OF THE FIGURES

Figure 1 presents a two-dimensional drawing with section A-A of the device type III (A-C) and three-dimensional scheme of its exploded components.
Figure 2 presents a two-dimensional drawing with section A-A of the device type IV (B-C) and three-dimensional scheme of its exploded components.
Figure 3 represents a three-dimensional scheme of the main components of an axial-piston, hydraulic motor and a hydraulic pump with multiple cycles, having one Device type III (A-C) and the axes of the pistons are parallel to the axis of the Device.
Figure 4 represents a two-dimensional drawing with cross sections A-A, B-B, C-C and D-D on the axial-piston, hydraulic motor and a hydraulic pump with multiple cycles, having one Device type III (A-C) and the axes of the pistons are parallel to the axis of the Device.
Figure 5 represents a three-dimensional scheme of the distribution plate and the holes for low and high pressure of an axial-piston, hydraulic motor and a hydraulic pump with multiple cycles, having one Device type III (A-C) and the axes of the pistons are parallel to the axis of the Device.

### EXAMPLES OF EXECUTION

According to the invention, the device is suitable to be executed in the following variations according to the movements performed by the rings:
Device type III (A) - with rotating inner ring and balls, giving via the closed, sinusoidal, spatial groove reciprocating motion with multiple cycles (and vice versa) of the inner ring, while the outer ring is constrained by the stationary element.

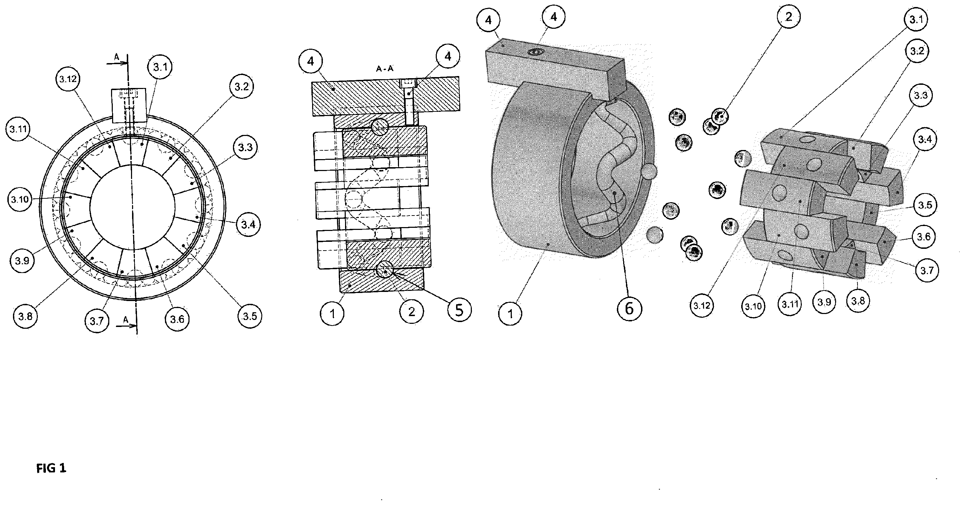

The kinematic chain in this variant the Device consists of 3 elements (Figure 1): outer ring 1, balls 2 and inner ring 3 and the outer ring 1 is also a stationary element. In the outer cylindrical surface of the inner ring 3, are engraved spherical sockets 5 in which is around a half of the surface of the balls 2. On the inside cylindrical surface of the outer ring 1 is engraved closed, sinusoidal, spatial groove 6 in which enters the other half of the surface of the balls 2. The axis of the device is the axis of the inner cylindrical surface of the outer ring 1. Plane of symmetry of this device is the plane perpendicular to the axis of the device and passing through the middle of the distance between the extreme points of the leading curve of the closed, sinusoidal, spatial groove, that are built in the direction of the axis of the device and orthogonally projected to this axis.

In the operating mode of the device, the inner ring 3 is rotated relatively to the axis of the device, whereby balls 2 are rotated around the axis of the device and due to the contact with the closed, sinusoidal, spatial groove 6 belonging to the stationary outer ring 3 and to the contact between balls 2 and the spherical sockets 5 on the inner ring 3, the balls 2 carry out the displacement of the inner ring 3 in the direction of the axis of the device. The stationary element provides immobility of the outer ring 1.

The construction creates reciprocating motion with multiple cycles of the inner ring 3 per one of his turnover. A translation cycle is complete forward and reverse displacement in the direction of the translation. The number of translation cycles of the device is defined by the number of vertices of the leading sinusoidal curve of the closed, sinusoidal, spatial groove. If the driving of this machine element is accomplished by several cycles of translational movement of the inner ring 3, then the balls 2 and the closed, sinusoidal, spatial groove 6 rotate the same ring around the axis of the Device. If the driving of the device is the turning of the inner ring 3, then the balls 2 and the closed, sinusoidal, spatial groove 6 accomplish the motion with multiple cycles of the same element- the inner ring 3. Thus, the device carries out both rotary and reciprocating motion with multiple cycles of the inner ring.

In the device type III, herein indicated as (A-C), the object of the present invention, the inner ring 3 consists of several segments (3.1 - 3.12), performing separately from each other a reciprocating movement, which is synchronized by the closed, sinusoidal, spatial groove 6 (Figure 1).

Device type IV - with rotating outer ring 1 and balls 2, giving via the closed, sinusoidal, spatial groove 6 reciprocating motion with multiple cycles (and vice versa) of the outer ring 1, while the inner ring 3 is constrained by the stationary element.

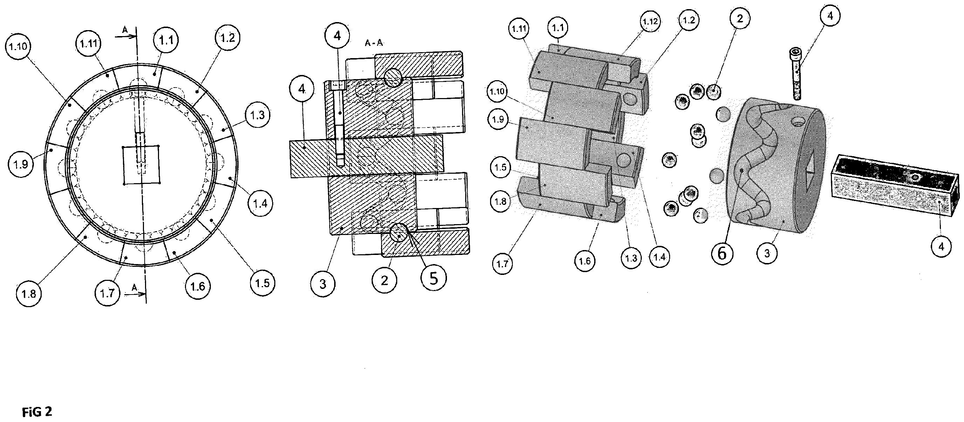

The kinematic chain in this variant the device consists of 3 elements (Figure 2): outer ring 1, balls 2 and, inner ring 3. The inner ring 3is also a stationary element.

In the outer cylindrical surface of the inner ring 3 are engraved spherical sockets 5 in which is located around a half of the surface of the balls 2. On the inside cylindrical surface of the outer ring 1 is engraved closed, sinusoidal, spatial groove 6 in which enters the other half of the surface of the balls 2. The axis of the device is the axis of the inner cylindrical surface of the outer ring 1. Plane of symmetry this device is the plane perpendicular to the axis of the device and passing through the middle of the distance between the extreme points of the leading curve of the closed, sinusoidal, spatial groove 6, that are built in the direction of the axis of the device and orthogonally projected to this axis.

In the operating mode of the device, the outer ring 1 is rotated relatively to the axis of the device, whereby balls 2 are rotated around the axis of the device and due to the contact with the closed, sinusoidal, spatial groove 6 belonging to the outer ring 1 and to the contact between the balls 2 and the spherical sockets 5 on the inner ring 3 (stationary), the balls 2 carry out the displacement of the outer ring 1, in the direction of the axis of the device. The stationary element provides immobility of the inner ring 3.

The construction creates reciprocating motion with multiple cycles of the outer ring 1 per one of its turnover. A translation cycle is the complete forward and reverse displacement in the direction of the translation. The number of translation cycles of the device is defined by the number of vertices of the leading sinusoidal curve of the closed, sinusoidal, spatial groove 6. If the driving of this machine element is accomplished by several cycles of translational movement of the outer ring 1, then the balls 2 and the closed, sinusoidal, spatial groove 6 rotate the same ring around the axis of the device. Thus, the device carries out both rotary and reciprocating motion with multiple cycles of the outer ring 1.

In the device type IV, herein indicated as (B-C), the object of the present invention, the outer ring 1 consists of several segments (1.1 - 1.12), performing separately from each other a reciprocating movement, which is synchronized by the closed, sinusoidal, spatial groove(Figure 2).

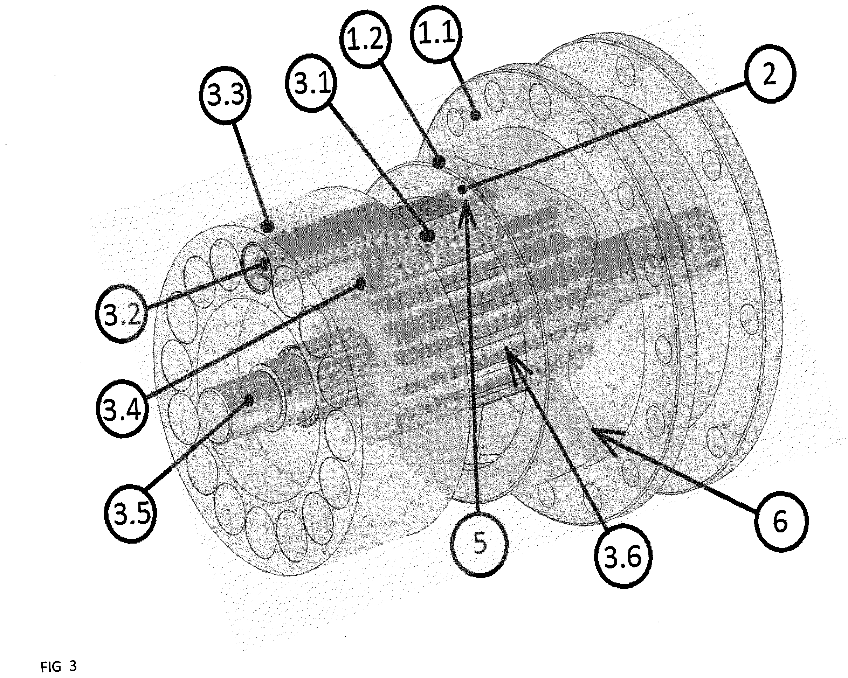

On Figure 3, Figure 4, and Figure 5 is shown a variant of one Device type III (A-C) made as an axial-piston hydraulic motor / pump and having parallel to the axis of this device position of the axes of the pistons.

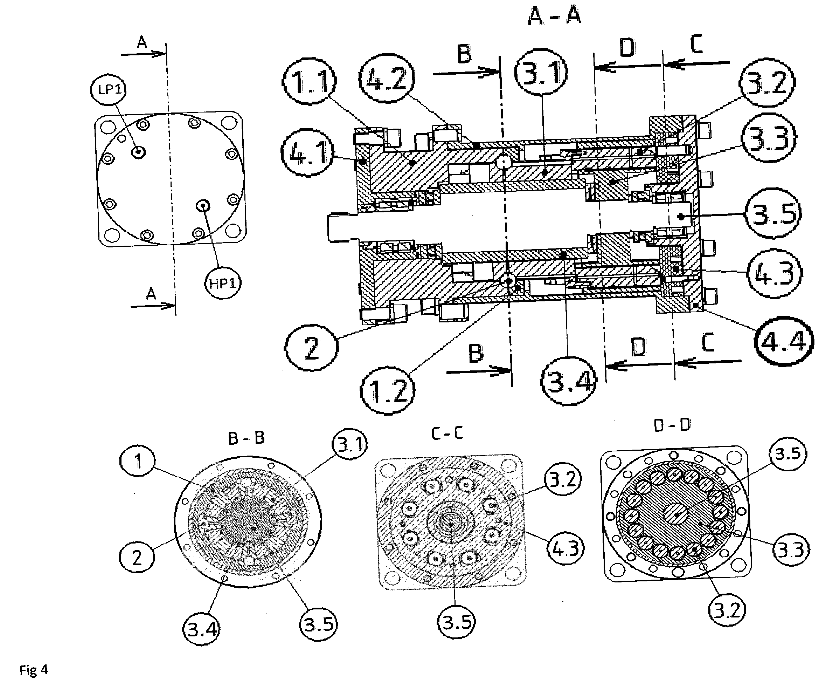

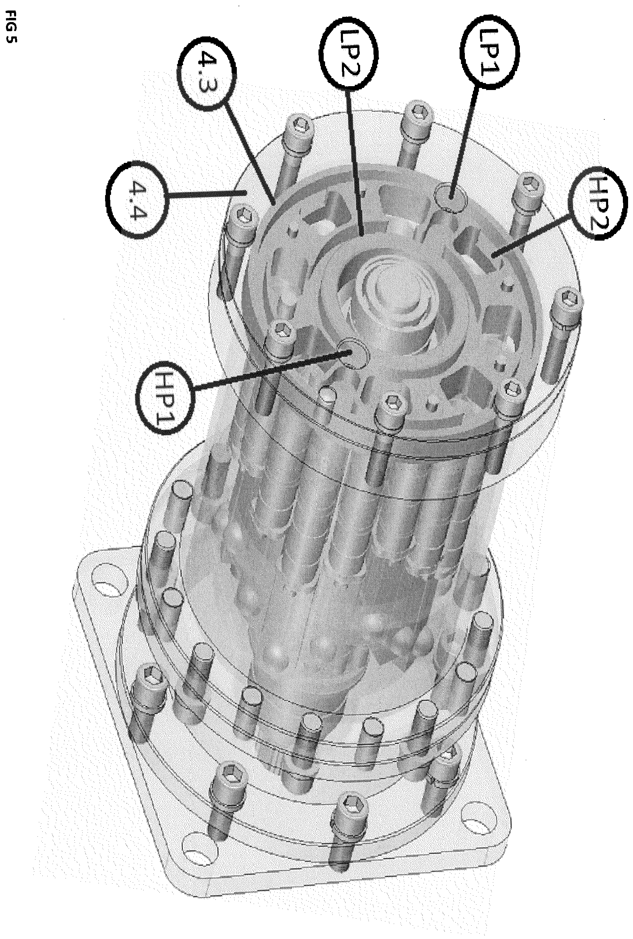

The outer ring of this motor / pump consists of the two parts 1.1 and 1.2 which are fixed to the two parts of the stationary element 4.1 and 4.2 - Fig. 4. On the inner cylindrical surface of the outer rings 1.1 and 1.2 of the Device is carved the closed, sinusoidal, spatial groove 6 of the Device. In this groove are included balls 2 - Figure 3. The balls 2 lie in the spherical sockets on the supporting part of the pistons 3.1 - Figure 3 and Figure 4. The pistons are 16 - Figure 4 - "DD" and they have two parts - the supporting 3.1 and the basic 3.2. The basic part of the pistons 3.2 enters in the revolver 3.3 - Figure 3. In the revolver 3.3 there are 16 holes for each basic part of the piston. The assembly between the basic part of the piston and the revolver is sliding. The two parts of the piston - the supporting 3.1 and the basic 3.2 contact with their foreheads, without being fastened, i.e. the basic part of the piston 3.2 only pushes the supporting part 3.1. The torque is not transmitted from the basic part of the piston 3.2 to the revolver 3.3. The supporting part 3.1 of the piston transmits the torque to the pillars 3.4, that are lying in cylindrical holes on the outer cylindrical surface of the output shaft 3.5. The supporting part 3.1 of the piston contacts with a sliding assembly on the inner cylindrical portion of the outer ring 1.2 and with a sliding assembly on the cylindrical surfaces of the pillars 3.4. The revolver 3.3 is assembled with the output shaft 3.5 via involute splines or other compound - Figure 3. The face of the revolver 3.3 - Fig. 4 - "AA" contacts with the distribution plate 4.3 via a sliding adjustment. When the revolver 3.3 is rotated, its holes with the respective basic parts of the pistons 3.2 stand against the holes on the distribution plate 4.3. Four of these pockets (HP2) - Figure 5 on the distribution plate 4.3 are connected to the high pressure hole (HPI) of the end plate 4.4. The other four pockets (LP2) on the distribution plate 4.3 are connected to the low pressure hole (LP1) of the end plate 4.4.

The constuction can work as a hydraulic motor or a hydraulic pump.

As hydraulic motor, in operation mode, in the hole (HP1) that is drilled into the plate 4.4 oil enters under high pressure, whereupon the oil passes through the pockets (HP2) on the distribution plate 4.3 - Figure 5 and presses on the foreheads of the basic part of the pistons 3.2 Fig. 3. The right forehead of the basic part of the pistons 3.2 presses on the left forehead of the front part of the pistons 3.1. The reciprocating movement of the front part of the pistons 3.1 pushes the bails 2 towards the closed, sinusoidal, spatial groove, carved in the two parts 1.1 and 1.2 of the outer ring of the Device. Since those parts 1.1 and 1.2 are connected to the stationary elements 4.1 and 4.2, the pressure on the balls 2 causes the rotation of the front parts of the piston 3.1 - Figure 3 around the axis of the output shaft 3.5. The front parts of the piston 3.1, by means of their inner cylindrical surface, spin around the axis of the Device the pillars 3.4, which rotate the output shaft 3.5. In mode of hydraulic pump (Figure 3) the output shaft 3.5 rotates the revolver 3.3 and via the pillars 3.4, via the part of the pistons 3.1, that supports the balls, via the balls 2, via the closed, sinusoidal, spatial groove on the outer ring 1.1 and 1.2, the basic part of the pistons 3.2 is moved towards the distribution plate 4.3 - Figure 4, and thus pressurized oil is supplied in the hole (LP1) Figure 5. At the reversal stroke of the pistons,the oil is sucked from the hole HP1 of the distribution plate.

In another variant of the invention (Figure 3, Figure 4 and Figure 5) when the engine is hydraulic and Its design includes one or more Device type III, the engine starts operating via the distribution plate 4.3 of Figure 4, because of which oil enters under high pressure through the hole for high pressure HP1 (Figure 5) of the plate 4.4 (Figure 4) in the space above the forehead of the pistons 3.2 of Figure 3. The pistons are moved rectilinearly into the holes of the revolver 3.3 (Figure 3) by a sliding adjustment. The pistons push the holder 3.1 of the balls 2 (Figure 3), which slides along one or two pillars 3.4 (Figure 3) with a sliding adjustment. The pillars lie in cylindrical holes, carved into the revolver 3.3. The balls 2 of Figure 3 lie in the spherical sockets of the support parts (holders) of the pistons. Their mutual movement is a ball joint. The balls push the closed, sinusoidal, spatial groove on the inner cylindrical surface of the outer ring of the Device 1.1, 1.2 (Figure 3). The compressive force of the balls 2 is decomposed into two components - radial and axial. The radial component of the compressive force of the balls on the outer ring of the revolver 3.3 rotates the Device around its axis. The flow of the force passes from the reaction of the radial component of the compressive force of the balls on the closed, sinusoidal, spatial grooveon the outer ring of the Device, through the ball, the holder, the pillars, the revolver and via involute splines (or other compound) towards the output shaft, when the mechanism is used as a hydraulic motor. The flow of the force is opposite when the mechanism is used as a hydraulic pump i.e. the movement starts from the output shaft, through the involute splines, the pillars, the support parts (holders) and the balls that slide and roll in the closed, sinusoidal, spatial groove on the stationary outer ring of the Device. The balls propel the support parts (holders) that push or pull the plungers (pistons) depending on the area of the closed, sinusoidal, spatial groove, giving them a straight reciprocating motion. During the movement of the pistons in a direction from the distribution plate towards the Device, the pump sucks a fluid. When the movement of the pistons is reverse, the hydraulic motor pushes the hydraulic fluid through the distribution plate and the holes LP1 (Figure 5) of the plate 4.4 (Figure 4) and the hydraulic pump pumps up oil through the same hole LP1. The locations of the holes for high and low pressure in the plate 4.4 (Figure 4) of the hydraulic motor and the hydraulic pump are reversed.

## Claims

1. Device for converting the reciprocating motion of the piston into rotary movement of the shaft and vice versa, in axial-piston mechanical systems, the device's kinematic chain comprising an external (1) and an internal (3) rings connected with the piston, and with the output shaft, wherein a spatial sinusoidal groove (6) with a 1/2 circular cross-section or spherical sockets (5) is / are made on the inner surface of the external ring (1) and reverse spherical sockets (5) or spatial sinusoidal groove (6) are / is formed on the outer surface of the inner ring (3), also comprises balls (2), lying in the spherical sockets (5) and in the spatial, sinusoidal groove (6) with a 1/2 circular cross-section, wherein the ring with sockets is both rotating and translational, **characterized by the fact that**
a) the simultaneously rotating and translating ring consists of more than one segment (3N or 1N), each of which has at least one socket (5), the segments having axes parallel to the axis of the device and performing relative to one another irrespective reciprocating motion, synchronized by the closed, sinusoidal, spatial groove (6);
b) each segment (3N or 1N) of the translating and at the same time rotating ring includes piston with basic (3.2) and front (3.1) parts, where the socket (5) is carved on the front part;
c) the device also includes pillars (3.4) lying in cylindrical grooves (3.6) located on the surface of the output shaft to transmit the torque to the output shaft created by the motion of the balls (2) on the sinusoidal groove (6).

2. Device according to claim 1, **characterized by the fact that** the inner ring is both rotating and translating.

3. Device according to claims 1 or 2, **characterized by the fact that** the front (3.1) and basic (3.2) parts of the piston contact with their foreheads so that the basic part (3.2) of the piston pushes the front part (3.1) in motion.

4. Device according to any of the preceding claims, **characterized by the fact that** it is connected to at least one other such device by means of rigid links (screws) between the rotating rings, and/or the rotating rings and the output shafts (1.6, 1.7), as well as between the output shafts (1.6, 1.7) of each of the devices.

5. Device according to claims 4, **characterized by** the fact that the devices are an even number and are connected in specularly positioned pairs, whereupon the pistons (1.1 and 2.1, 1.2 and 2.2, 1.3 and 2.3, 1.4 and 2.4) in the pair of the devices, which have opposite position, relative to one another at the same height on the leading curve of the closed, sinusoidal, spatial grooves (6), perform asymmetric, reciprocating motion with multiple cycles, parallel to or on the axis of the device.

6. Device according to any of the preceding claims, **characterized by the fact that** the device is hydraulic and includes a distribution plate (4.3) for performing and controlling the motion of the pistons, the distribution plate (4.3) having holes, where also includes an end plate (4.4) with a high pressure hole (HP1) and a low pressure hole (LP1), as part of the holes of the distribution plate (4.3) are connected to the high pressure port (HP1) of the end plate (4.4) by means of a rigid connection with fasteners between the distribution plate (4.3) and the end plate (4.4) and the other part of the holes of the distribution plate (4.3) are connected with the low pressure hole (LP1) of the end plate (4.4) by means of a rigid connection with the fasteners between the distribution plate (4.3) and the end plate (4.4), wherein the basic part (3.2) of each piston enters in a revolver (3.3) with holes for the basic parts (3.2) of each piston.

7. Device according to claims 6, **characterized by the fact that** the devices are more than one and are connected to each other by means of a rigid connection with fasteners between the rotation rings of each of the devices, and wherein all devices operate on a common output shaft.

8. Internal combustion engine **characterized by the fact that** it comprises device according to any of the claims from 1 to 5.

9. Compressor **characterized by the fact that** it includes device according to the claims 6 or 7.

10. Pump **characterized by the fact that** it includes device according to the claims 6 or 7.

## Patentansprüche

1. Eine Vorrichtung zum Umwandeln der alternierenden Bewegung des Kolbens in eine Drehbewegung der Welle und umgekehrt bei Axialkolbenmechaniksystemen, bei der die kinematische Kette der Vorrichtungen einen äußeren (1) und einen inneren (3) Ring enthält, welche mit dem Kolben und mit der Abtriebswelle verbunden sind, wobei die Innenfläche des Außenrings (1) mit einer räumlich sinusförmigen Nut (6) mit einem halbrunden Querschnitt oder umgekehrten Kugelbuchsen (5) und die Außenfläche des Innenrings (3) mit umgekehrten Kugelbuchsen (5) oder einer räumlich sinusförmigen Nut (6) versehen sind, die ebenfalls aus Kugeln (2) bestehen, welche in den Kugelbuchsen (5) und in der räumlichen sinusförmigen Nut (6) mit dem halbrunden Querschnitt liegen, wobei der Ring mit den Buchsen sowohl rotierende als auch translatorische Bewegungen ausführt und **dadurch gekennzeichnet ist, dass**
a) der gleichzeitig rotierende und translatorische Bewegungen ausführende Ring aus mehr als einem Segment (3N oder 1N) mit jeweils mindestens einer Buchse (5) besteht, wobei die Segmente Achsen aufweisen, die parallel zur Achse der Vorrichtung verlaufen und voneinander unabhängige alternierende Bewegung ausführen, synchronisiert mit dem geschlossenen, räumlich sinusförmigen Nut (6);
b) jedes Segment (3N oder 1N) des gleichzeitig translatorische und rotierende Bewegungen ausführenden Rings einen Kolben mit Grund- (3.2) und Vorderteil (3.1) enthält, bei dem die Buchse (5) am Vorderteil genutet ist;
c) die Vorrichtung auch Stößel (3.4) enthält, die in zylindrischen **Kanälen** (3.6) an der Oberfläche der Abtriebswelle angeordnet sind zwecks Übertragung des durch die Bewegung der Kugeln (2) im sinusförmigen Nut (6) erzeugte Drehmoments auf die Abtriebswelle;

2. Vorrichtung nach Anspruch 1, **dadurch gekennzeichnet, dass** der Innenring sowohl rotierende als auch translatorische Bewegungen ausführt.

3. Vorrichtung nach den Ansprüchen 1 oder 2, **dadurch gekennzeichnet, dass** der Vorderteil (3.1) und der Grundteil (3.2) des Kolbens mit ihren Stirnen in Kontakt stehen, so dass der Grundteil (3.2) des Kolbens den Vorderteil (3.1) in Bewegung bringt.

4. Vorrichtung nach einem der vorhergehenden Ansprüche, **dadurch gekennzeichnet, dass** sie mit mindestens einer anderen derartigen Vorrichtung mittels starrer Verbindungen (Schrauben) zwischen den Drehringen und/oder zwischen den Drehringen und den Abtriebswellen (1.6., 1.7) sowie zwischen den Abtriebswellen (1.6, 1.7) der einzelnen Geräte verbunden sind.

5. Vorrichtung nach Anspruch 4, **dadurch gekennzeichnet, dass** die Vorrichtungen eine gerade Anzahl sind und spiegelartig paarweise angeordneten miteinander verbunden sind, wobei die Kolben (1.1 und 2.1, 1.2 und 2.2, 1.3 und 2.3, 1.4 und 2.4) in den entgegengesetzt zueinander angeordneten Paarungen in gleicher Höhe auf der Führungskurve der geschlossenen, räumlich sinusförmigen Nuten (6) liegen und eine asymmetrische alternierende Bewegung in mehreren Zyklen parallel zur oder auf der Achse der Vorrichtung ausführen.

6. Vorrichtung nach einem der vorhergehenden Ansprüche, **dadurch gekennzeichnet, dass** die Vorrichtung hydraulisch ist und mit einer Verteilerplatte (4.3) zum Durchführen und Steuerung der Bewegung der Kolben ausgestattet ist, wobei die Verteilerplatte (4.3) Öffnungen hat und auch mit einer Endplatte (4.4) mit einer Hochdruckbohrung (HP1) und einer Niederdruckbohrung (LP1) versehen ist; ein Teil der Öffnungen der Verteilerplatte (4.3) ist mit dem Hochdruckanschluss (HP1) der Endplatte (4.4) mittels einer starren Verbindung mit Befestigungselementen zwischen der Verteilerplatte (4.3) und der Endplatte (4.4) verbunden; der andere Teil der Öffnungen der Verteilerplatte (4.3) ist mit der Niederdruckbohrung (LP1) der Endplatte (4.4) mittels einer starren Verbindung mit Befestigungselementen zwischen der Verteilerplatte (4.3) und der Endplatte (4.4) verbunden, wobei der Grundteil (3.2) jedes Kolbens in einen Zylinder (3.3) mit Öffnungen für die Grundteile (3.2) eines jeden Kolbens hineingleitet.

7. Vorrichtung nach Anspruch 6, **dadurch gekennzeichnet, dass** die Vorrichtungen mehr als eine an der Zahl sind und mittels einer starren Verbindung mit Befestigungselementen zwischen den Drehringen jeder Vorrichtung miteinander verbunden sind und dass alle Vorrichtungen mit einer gemeinsamen Abtriebswelle arbeiten.

8. Verbrennungsmotor, **dadurch gekennzeichnet, dass** er mit Vorrichtung entsprechend den Ansprüchen 1 bis 5 ausgestattet ist.

9. Kompressor, **dadurch gekennzeichnet, dass** er mit Vorrichtung nach den Ansprüchen 6 oder 7 ausgestattet ist.

10. Pumpe, **dadurch gekennzeichnet, dass** sie mit Vorrichtung nach den Ansprüchen 6 oder 7 ausgestattet ist.

## Revendications

1. Dispositif pour convertir le mouvement alternatif du piston en mouvement rotatif de l'arbre et inversement, dans les systèmes mécaniques à piston axial, la chaîne cinématique des dispositifs comprenant un anneau externe (1) et un anneau interne (3) reliés au un piston, et avec l'arbre de sortie, dans lequel une rainure sinusoïdale spatiale (6) de 1/2 section transversale circulaire ou de douilles sphériques (5) est formée sur la surface interne de la anneau externe (1) et des inverses douilles sphériques (5) ou une gorge sinusoïdale spatiale (6) sont / est formée sur la surface extérieure de l'anneau interne (3), comprend également des billes (2), se trouvant dans les douilles sphériques (5) et dans la rainure spatiale sinusoïdale (6) de 1/2 section transversale circulaire, dans laquelle la rainure àvec douilles est à la fois rotative et translationnelle, **caractérisée en ce que**
a) l'anneau tournant et translatant simultanément est constitué de plus d'un segments (3N ou 1N), chacun d'entre eux comportant au moins une douille (5), les segments ayant des axes parallèles à l'axe du dispositif et performants les uns par rapport aux autres, indépendamment mouvement alternatif, synchronisé par la rainure spatiale sinusoïdale fermée (6);
b) chaque segment (3N ou 1N) de l'anneau de translation et de rotation simultanément comprend un piston avec un partie de base (3.2) et un partie avant (3.1), la douille (5) étant sculptée à l'avant;
c) le dispositif comprend également des piliers (3.4) situés dans des **gorges** cylindriques (3.6) situées à la surface de l'arbre de sortie pour transmettre le couple à l'arbre de sortie créé par le mouvement des billes (2) sur la rainure sinusoïdale (6) .

2. Dispositif selon la revendication 1, **caractérisé en ce que** l'anneau interne (3) est à la fois en rotation et en translation.

3. Dispositif selon les revendications 1 ou 2, **caractérisé en ce que** les partie avant (3.1) et partie de base (3.2) du piston sont en contact avec leur front, de sorte que la partie de base (3.2) du piston pousse la partie avant (3.1) en mouvement.

4. Dispositif selon l'une des revendications précédentes, **caractérisé en ce qu'**il est relié à au moins un autre dispositif de ce type au moyen de liaisons rigides (vis) entre les anneaux tournantes et / ou les anneaux tournantes et les arbres de sortie (1.6, 1.7), ainsi qu'entre les arbres de sortie (1.6, 1.7) de chacun des dispositifs.

5. Dispositif selon la revendication 4, **caractérisé en ce que** les dispositifs sont un nombre pair et sont connectés par paires positionnées de manière spéculaire, après quoi les pistons (1.1 et 2.1, 1.2 et 2.2, 1.3 et 2.3, 1.4 et 2.4) dans la paire des dispositifs, qui ont des positions opposées les uns par rapport aux autres à la même hauteur sur la courbe principale des rainures sinusoïdales fermées (6), effectuent un mouvement alternatif asymétrique avec plusieurs cycles, parallèlement à ou sur l'axe du dispositif.

6. Dispositif selon l'une quelconque des revendications précédentes, **caractérisé en ce que** le dispositif est hydraulique et comprend une plaque de distribution (4.3) pour effectuer et contrôler le mouvement des pistons, la plaque de distribution (4.3) comportant des trous, où comprend également une plaque d'extrémité (4.4) avec un trou haute pression (HP1) et un trou basse pression (LP1), alors une partie des trous de la plaque de distribution (4.3) est reliée à l'orifice haute pression (HP1) de la plaque d'extrémité (4.4) au moyen d'une liaison rigide avec attaches entre la plaque de distribution (4.3) et la plaque terminale (4.4) et l'autre partie des trous de la plaque de distribution (4.3) sont reliées au trou basse pression (LP1) du plaque d'extrémité (4.4) au moyen d'une liaison rigide avec les fixations entre la plaque de distribution (4.3) et la plaque d'extrémité (4.4), dans laquelle la partie de base (3.2) de chaque piston entre dans un revolver (3.3) avec des trous pour les parties de base (3.2) de chaque piston.

7. Dispositif selon la revendication 6, **caractérisé en ce que** les dispositifs sont plusieurs et sont reliés les uns aux autres par une liaison rigide avec des attaches entre les anneau de rotation de chacun des dispositifs et que tous les dispositifs fonctionnent arbre de sortie commun.

8. Moteur à combustion interne **caractérisé en ce qu'**il comprend un dispositif selon l'une quelconque des revendications 1 à 5.

9. Compresseur **caractérisé en ce qu'**il comprend un dispositif selon les revendications 6 ou 7.

10. Pompe **caractérisée en ce qu'**elle comprend un dispositif selon les revendications 6 ou 7.
